# EUROPEAN PATENT SPECIFICATION

(11) **EP 2 602 262 B1**
(45) Date of publication and mention of the grant of the patent: **04.11.2015**
(21) Application number: 12195329.3
(22) Date of filing: 03.12.2012
(51) Int. Cl.: C07F 7/18, C08C 19/25, C08L 15/00

(54) **Organosilicon compound and method for preparing same, compounding agent for rubber, and rubber composition.**
Organosiliciumverbindung und Verfahren zu ihrer Herstellung, Mischungsmittel für Gummi und Gummizusammensetzung
Composé d'organosilicone et son procédé de préparation, agent de formulation pour caoutchouc et composition de caoutchouc

(30) Priority: 07.12.2011 JP 2011267720
(43) Date of publication of application: 12.06.2013
(73) Proprietor: Shin-Etsu Chemical Co., Ltd., Chiyoda-ku, Tokyo (JP)
(72) Inventor: Hirokami, Munenao, Annaka-shi, Gunma (JP)
(74) Representative: Stoner, Gerard Patrick

(56) References cited:
- WO-A1-2008/130782
- WO-A1-2009/148932
- WO-A1-2011/049180
- WO-A1-2011/076377
- WO-A1-2011/079922
- DE-A1- 3 101 380
- US-B1- 6 229 036
- DATABASE CA [Online] CHEMICAL ABSTRACTS SERVICE, COLUMBUS, OHIO, US; 27 October 2011 (2011-10-27), Okada, Kouji et al.: XP002693621, retrieved from STN Database accession no. 155:590897 & WO 2011/132594 A1 (JSR CORP [JP]; OKADA KOUJI [JP]; TANAKA RYOUJI [JP]; UDAGAWA YOSHIYUKI) 27 October 2011 (2011-10-27)
- DATABASE CA [Online] CHEMICAL ABSTRACTS SERVICE, COLUMBUS, OHIO, US; 2 December 2010 (2010-12-02), Nakaya, Kenji et al.: XP002693622, retrieved from STN Database accession no. 153:645147 & JP 2010 270212 A (BRIDGESTONE CORP) 2 December 2010 (2010-12-02)
- MORIS EISEN ET AL.: "Catalytic asymmetric hydrogenation by some homogeneous and silica-bound mu-thiolato-mu-chlorodicarbonylbis-(neomen thyldiphenylphosphine)dirhodium complexes", J. MOL. CATAL., vol. 56, 1989, pages 329-337, XP002693623,
- DATABASE CA [Online] CHEMICAL ABSTRACTS SERVICE, COLUMBUS, OHIO, US; 1984, Voronkov, M.G: XP002693624, retrieved from STN Database accession no. 102:132169
- DATABASE CA [Online] CHEMICAL ABSTRACTS SERVICE, COLUMBUS, OHIO, US; 15 December 2012 (2012-12-15), Tanaka, Ryouji et al.: XP002693625, retrieved from STN Database accession no. 156:36336 & WO 2011/155326 A1 (JSR CORP [JP]; TANAKA RYOUJI [JP]; SHIBATA MASAHIRO [JP]; MATSUMOTO TA) 15 December 2011 (2011-12-15)
- DATABASE CA [Online] CHEMICAL ABSTRACTS SERVICE, COLUMBUS, OHIO, US; 16 August 2012 (2012-08-16), Shibita, Masahiro et al.: XP002693626, retrieved from STN Database accession no. 157:329009 & WO 2012/108487 A1 (JSR CORP [JP]; SHIBATA MASAHIRO [JP]; OKADA KOJI [JP]) 16 August 2012 (2012-08-16)
- JUBARAJ B. BARUAH ET AL.: "Polycondensation of diarylsilanes with aromatic dithiols and the model reaction involving RhCl(PPh3)3-catalyzed S-S bond formation", ORGANOMETALLICS, vol. 15, 1996, pages 456-459,
- DANIEL J. HARRISON ET AL.: "Toward selective functionalisation of oligosilanes: borane catalysed dehydrogenative coupling of silanes with thiols", DALTON TRANS., vol. 2008, 2008, pages 3401-3411,

## Description

### TECHNICAL FIELD

This invention relates to a method for preparing an organosilicon compound having a hydrolysable silyl group and a sulfur-silicon bond in the molecule, useful in a compounding agent for rubber containing the compound, and also in a rubber composition formulated with the compounding agent for rubber, such as for tires.

### BACKGROUND

Sulfur-containing organosilicon compounds are useful as an essential ingredient for making tires made of silica-filled rubber compositions. The silica-filled tires have improved performance in applications of automobile and are particularly excellent in wear resistance, rolling resistance and wet gripping performance. Such an improved performance is closely associated with an improvement in the low fuel consumption of tire and has been extensively studied recently.

For an improved low fuel consumption, it is essential to raise a filling rate of silica in rubber compositions. Although the silica-filled rubber composition reduces the rolling resistance of tire and is improved in wet gripping performance, such a rubber composition is high in unvulcanized viscosity and needs multi-stage kneading, thus presenting a problem on workability. Accordingly, in rubber compositions merely formulated with an inorganic filler such as silica, the filler suffers from the lack of dispersion, thus leading to the problem in that breakdown strength and wear resistance considerably drop. To avoid this, it has been essential to use a sulfur-containing organosilicon compound that is able to improve dispersibility of an inorganic filler in rubber and acts to chemically bond the filler with a rubber matrix (see JP-B S51-20208).

It is known in the art that the sulfur-containing organosilicon compounds including compounds having an alkoxysilyl group and a polysulfide silyl group in the molecule such as, for example, bis-triethoxysilylpropyltetrasulfide, and bis-triethoxysilylpropyldisulfide are effective (see JP-T 2004-525230, JP-A 2004-18511, JP-A 2002-145890 and US-A-6229036).

Aside from the organosilicon compounds having a polysulfide group, there are known applications of a blocked mercapto group-containing organosilicon compound of a thioester type which is favorable for dispersion of silica and a sulfur-containing organosilicon compound of a type wherein an amino alcohol compound is interesterified at the site of a hydrolysable silyl group that is favourable for affinity for silica via hydrogen bond (see JP-A 2005-8639, JP-A 2008-150546 and JP-A 2010-132604, JP 4571125 and US-B-6414061).

However, the use of such sulfur-containing organosilicon compounds still leaves something to be desired. When compared with sulfide-based compounds, costs are rather high and many other problems exist including a problem of productivity associated with complicated production processes.

As techniques of forming a sulfur-silicon bond, there are known (1) a technique of reacting a compound having a mercapto group with a chlorosilane in the presence of an amine base such as triethylamine or the like, (2) a technique of forming a sulfur-metal bond by reaction of a compound having a mercapto group with a metallic base such as sodium methoxide, followed by subsequent reaction with chlorosilane, (3) a technique of forming a sulfur-sodium bond by reaction of a compound having a polysulfide group with sodium and subsequently reacting with chlorosilane, and (4) a technique of reacting a compound having a mercapto group with a silazane compound in the presence of an amine catalyst such as an imidazole or the like.

However, in (1) and (2) above, not less than an equimolar amount of a base is required and a large amount of filtrate is produced. Additionally, a large amount of solvent is needed, resulting in very low productivity. In (3), sodium that is difficult to handle is used and a large amount of filtrate is formed, so that productivity is very low. In (4), there is a problem in that since a silazane is used as a starting material, a compound having a simple substituent can be just prepared.

### THE INVENTION

An aim herein is to provide a new method for preparing sulfur-containing organosilicon compounds of the kind useful as compounding agents in rubbers, and which desirably solve one or more above-mentioned problems e.g. allowing the hysteresis loss of resulting rubber compositions to be significantly lowered, and improving workability. The methods can be higher in productivity than conventional methods.

The product compounds can be used as compounding agents for rubbers, especially with powder filler such as silica, and in rubber compositions containing the compounding agent, and tires formed from such rubber compositions.

According to the invention, we provide a method for preparing an organosilicon compound of the following general formula (3) : 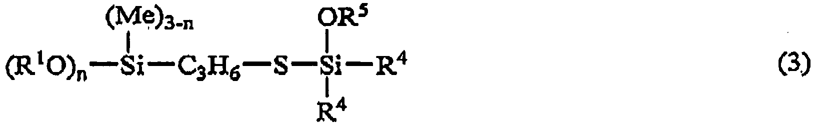 wherein
R¹ is an unsubstituted or substituted alkyl group having 1 to 10 carbon atoms or an unsubstituted or substituted aryl group having 6 to 10 carbon atoms,
R⁴ is independently an unsubstituted or substituted alkyl group having 1 to 20 carbon atoms, an unsubstituted or substituted aryl group having 6 to 10 carbon atoms, an unsubstituted or substituted aralkyl group having 7 to 10 carbon atoms, an unsubstituted or substituted alkenyl group having 2 to 10 carbon atoms or an unsubstituted or substituted organoxy group having 1 to 20 carbon atoms,
R⁵ is an unsubstituted or substituted alkyl group having 1 to 20 carbon atoms, an unsubstituted or substituted aryl group having 6 to 10 carbon atoms, an unsubstituted or substituted aralkyl group having 7 to 10 carbon atoms or an unsubstituted or substituted alkenyl group having 2 to 10 carbon atoms,
Me is a methyl group, and n is an integer of 1 to 3, the method comprising
reacting, in the presence of transition metal catalyst RhCl(PPh₃)₃ or Lewis acid catalyst (pentafluorophenyl)boric acid/borate, an organosilicon compound of the following general formula (i') having a mercapto group with an organosilicon compound of the following general formula (ii') having an Si-H bond to form a sulfur-silicon bond: 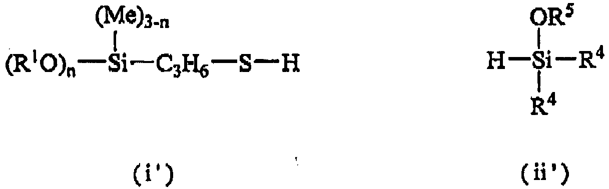 wherein R¹, R⁴, R⁵, Me and n have the same meanings as defined above.

The catalyst RhCl(PPh₃)₃ is known in the prior art for Si-S bond formation e.g. in J. Baruah et el, Organometallics 1996 vol. 15 pp. 456 - 459 "Polycondensation of Diarylsilanes with Aromatic Dithiols and the Model Reaction involving Si-S Bond Formation".

D. J. Harrison et al., in Dalton Trans. 2008 pp 3401 - 3411 describe the use of B(C₆H₅)₃ as catalyst for functionalisation of silanes, including coupling with thiols.

The organosilicon compound may be represented by the following general formulae (7) to (9): 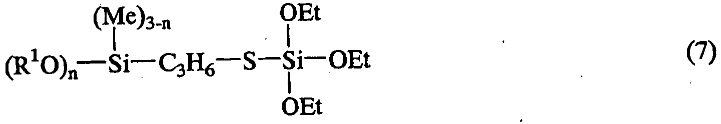 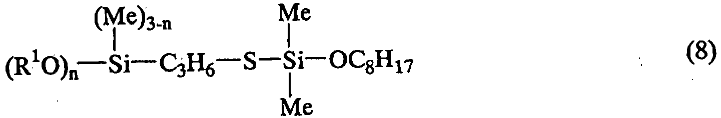 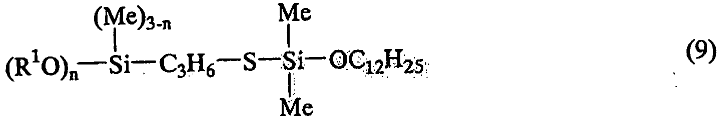 wherein R¹ and n have the same meanings as defined above, Me is a methyl group and Et is an ethyl group.

In the organosilicon compound as defined R¹ may represent CH₃CH₂.

The organosilicon compound may be included in a compounding agent for rubber. The compounding agent for rubber may further include at least one type of powder wherein a ratio by weight of the organosilicon compound (A) and the at least one type of powder (B) is such that (A)/(B) = 70/30 to 5/95. The compounding agent for rubber may be included in a rubber composition including a rubber, and a tire may be formed by use of the rubber composition.

### ADVANTAGEOUS EFFECTS

The preparation methods disclosed herein can, we find, be much higher in productivity than existing preparation methods. The organosilicon compounds produced thereby have a hydrolysable silyl group and a sulfur-silicon bond therein, whereby in effect a mercapto group is protected with the silyl group, so that mercapto odor can be reduced. We find that the compounds are able to achieve a low scorch when applied as a rubber composition, can remarkably improve workability and can satisfy desirable low fuel consumption tire characteristics.

### FURTHER EXPLANATIONS; OPTIONS AND PREFERENCES

The invention is particularly described below. It will be noted that in the practice of the invention, "silane coupling agent" is intended to be embraced in "organosilicon compound."

### Organosilicon compound (silane coupling agent)

The features of the organosilicon compound (silane coupling agent) reside in having both structures (i) and (ii) indicated below:
(i) a hydrolysable silyl group; and
(ii) a sulfur-silicon bond.

The organosilicon compound made in the invention is represented by the following general formula (3) having both these structures: 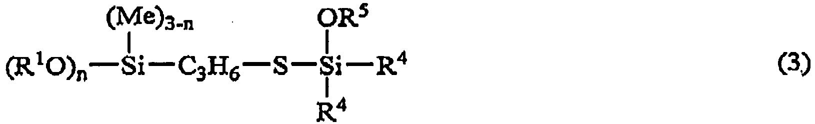 wherein R¹ is an unsubstituted or substituted alkyl group having 1 to 10 carbon atoms or an unsubstituted or substituted aryl group having 6 to 10 carbon atoms,
R⁴ is independently an unsubstituted or substituted alkyl group having 1 to 20 carbon atoms, an unsubstituted or substituted aryl group having 6 to 10 carbon atoms, an unsubstituted or substituted aralkyl group having 7 to 10 carbon atoms, an unsubstituted or substituted alkenyl group having 2 to 10 carbon atoms or an unsubstituted or substituted organoxy group having 1 to 20 carbon atoms, R⁵ is an unsubstituted or substituted alkyl group having 1 to 20 carbon atoms, an unsubstituted or substituted aryl group having 6 to 10 carbon atoms, an unsubstituted or substituted aralkyl group having 7 to 10 carbon atoms or an unsubstituted or substituted alkenyl group having 2 to 10 carbon atoms,
Me is a methyl group, and n is an integer of 1 to 3.

More specific examples include those represented by the following general formulas (7) to (9): 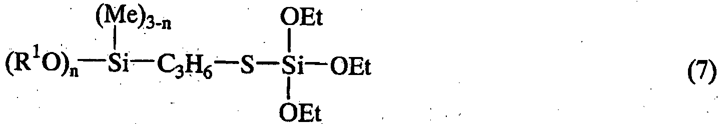 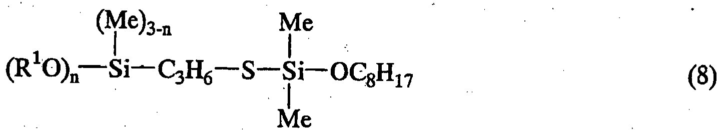 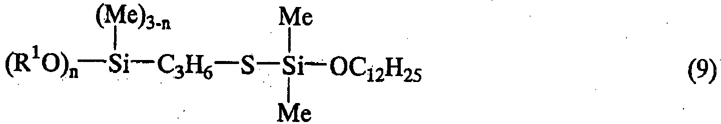 wherein R¹, n and Me have the same meanings as defined above and Et is an ethyl group.

Still more specifically, in those compounds of the formulas (3) and (7) to (9), R¹ is preferably CH₃CH₂.

Examples of alkyl and aryl groups of R¹ include a methyl group, an ethyl group, a propyl group, a butyl group, a phenyl group and the like, of which a methyl group or ethyl group is preferred and an ethyl group more preferred.

Examples of R⁴ include a methyl group, an ethyl group, a tert-butyl group, an octyl group, a decyl group, a dodecyl group or the like for alkyl group; a phenyl group, a xylyl group, a tolyl group or the like for aryl group; a benzyl group or the like for aralkyl group; a vinyl group, a propenyl group, a pentenyl group or the like for alkenyl group; and an alkoxy group such as a methoxy group, an ethoxy group, a propoxy group, a butoxy group, an octoxy group, a dodecoxy group or the like, an aryloxy group such as phenoxy group or the like, and alkenyloxy group such as a vinyloxy group, a propenyloxy group, a pentenyloxy group or the like for organoxy group. Preferably R⁴ are selected from C₁₋₆ alkyl, phenyl, and C₁₋₂₀ alkoxy. More preferably, there is mentioned for R⁴ alkyl group having 1 to 4 carbon atoms, a phenyl group or an alkoxy group having 1 to 12 carbon atoms. Examples of an alkyl group, aryl group, aralkyl group and alkenyl group of R⁵ include a methyl group, an ethyl group, a propyl group, a butyl group, a tert-butyl group, an octyl group, a decyl group, a dodecyl group, a phenyl group, a benzyl group, a vinyl group, a propenyl group, a pentenyl group and the like, of which an alkyl group having 1 to 12 carbon atoms is preferred.

Since the mercapto group of the organosilicon compound is protected with the silyl group, the mercapto odor is significantly reduced. When the organosilicon compound is mixed with water or an alcohol, the silyl group is deprotected, thus leading to the regeneration of mercapto group. Thus, the organosilicon compound can be utilised as a mercaptosilane reduced in mercapto odor.

The organosilicon compound of the invention is obtained by dehydrogenation reaction between an organosilicon compound having one or more mercapto groups and an organosilicon compound having one or more Si-H bonds in the presence of a catalyst.

The side product produced in the preparation method of the invention is hydrogen and thus, there is no filtrate. Additionally, the reaction well proceeds in a solvent-free condition, so that the preparation method is very high in productivity.

When the organosilicon compound is prepared, a solvent may be used, if necessary. The type of solvent is not critical so far as it is non-reactive with the starting materials of an organosilicon compound having a mercapto group and an organosilicon compound having an Si-H bond. Specifically, mention is made of an aliphatic hydrocarbon solvent such as pentane, hexane, heptane, decane or the like, an ether solvent such as diethyl ether, tetrahydrofuran, 1,4-dioxane or the like, an amide solvent such as dimethylformamide, N-methylpyrrolidone or the like, or an aromatic hydrocarbon solvent such as benzene, toluene, xylene or the like.

In this case, for obtaining organosilicon compound of the above formulae (3) and (7) to (9), an organosilicon compound of the following general formula (i') having a mercapto group and an organosilicon compound of the following general formula (ii') having an Si-H bond are reacted thereby forming a sulfur-silicon bond. 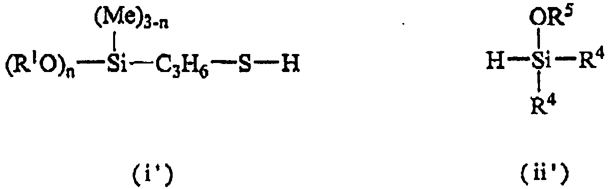 wherein R¹, R⁴, R⁵, Me and n have the same meanings (and options and preferences) as defined before.

The starting organosilicon compound having a mercapto group, which is necessary for preparing the organosilicon compound is not critical in type.
Specific examples include
γ-mercaptopropyltrimethoxysilane,
γ-mercaptopropylmethyldimethoxysilane,
γ-mercaptopropyldimethylmethoxysilane,
γ-mercaptopropyltriethoxysilane,
γ-mercaptopropylmethyldiethoxysilane,
γ-mercaptopropyldimethylethoxysilane and the like although not limited thereto.

The starting organosilicon compound having an Si-H bond, which is necessary for preparing the organosilicon compound of the invention, is not critical in type. Specific examples include triethoxysilane, tributoxysilane, dimethyldodecoxysilane, dimethylbutoxysilane, dimethyloctoxysilane, dimethyldodecoxysilane, and the like.

The catalyst necessary for the preparation of the organosilicon compound includes a transition metal catalyst or a Lewis acid catalyst. The transition metal catalyst is RhCl(PPh₃)₃. The Lewis acid catalyst is (pentafluorophenyl) borate/boric acid.

In the preparation of the organosilicon compound, the reaction is preferably carried out in view of the reactivity and productivity in such a way that a ratio of an organosilicon compound having a mercapto group and an organosilicon compound having a Si-H bond is within a range of 0.5 to 1.5 mol, preferably 0.9 to 1.1 mol of the Si-H bond per mole of the mercapto group.

In the preparation of the organosilicon compound the reaction is preferably carried out in view of the reactivity and productivity in such a way that a ratio of an organosilicon compound having a mercapto group and a catalyst is within a range of 0.000001 to 0.1 mol, preferably 0.000001 to 0.001 mol of the catalyst per mole of the mercapto group.

In the preparation of the organosilicon compound the reaction is preferably carried out in view of the reactivity and productivity in such a way that a ratio of an organosilicon compound having a mercapto group and a catalyst is within a range of 0.000001 to 0.1 mol, preferably 0.000001 to 0.001 mol of the catalyst per mole of the mercapto group.

The reaction temperature is not critical and is generally within a range of room temperature to boiling points of starting reactants and an organic solvent. Preferably, the reaction is carried out at 50°C to 150°C, more preferably at 60°C to 120°C. The reaction time is not critical so far as it is sufficient to allow the reaction to proceed. The reaction time is preferably at about 30 minutes to 24 hours, more preferably at about 1 to 10 hours.

The organosilicon compound is conveniently used as a compounding agent for rubber.

The compounding agent for rubber may be one wherein the organosilicon compound as a component (A) is preliminarily mixed with at least one powder as component (B) to provide a compounding agent. As powder (B), carbon black, talc, calcium carbonate, stearic acid, silica, aluminium hydroxide, alumina, magnesium hydroxide and the like are exemplified. In view of reinforcement, silica and aluminum hydroxide are preferred, of which silica is more preferred.

The amount of powder (B) is such that components (A)/(B) are preferably at 70/30 to 5/95, more preferably at 60/40 to 10/90 on weight basis. If the amount of powder (B) is smaller, the compounding agent for rubber becomes liquid in nature with some cases that charge into a rubber kneader may become difficult. If the amount of powder (B) is larger, a total amount becomes larger relative to an effective amount of the compounding agent for rubber, so that the transport costs may become high.

The compounding agent for rubber may be a mixed one with a fatty acid, a fatty acid salt, or an organic polymer or rubber such as polyethylene, polypropylene, a polyoxyalkylene, a polyester, a polyurethane, polystyrene, polybutadiene, polyisoprene, natural rubber, a styrene-butadiene copolymer or the like. Moreover, a variety of additives ordinarily formulated in tires and other general rubber may also be formulated including a vulcanizer, a crosslinking agent, a vulcanization accelerator, crosslinking promoter, various types of oils, an antiaging agent, a filler, a plasticizer and the like. These additives may be either liquid or solid in nature, or may be diluted with an organic solvent or may be emulsified.

The compounding agent for rubber can be conveniently used in rubber compositions formulated with silica.

In this case, the amount of compounding agent for rubber is preferably such that the organosilicon compound is at 0.2 to 30 parts by weight, more preferably at 1.0 to 20 parts by weight per 100 parts by weight of filler (powder) formulated in a rubber composition. If the amount of the organosilicon compound is smaller, desired rubber physical properties cannot be obtained. In contrast, when the amount is larger, the effect against the amount is saturated, thus being poor in economy.

As a rubber formulated as a main component of rubber compositions in which the compounding agent is used, any suitable rubber, e.g. as ordinarily formulated in hitherto known various types of rubber compositions, can be used including, for example, natural rubber (NR), diene rubbers such as isoprene rubber (IR), various types of styrene-butadiene copolymer rubbers (SBR), various types of polybutadiene rubbers (BR), acrylonitrile-butadiene copolymer rubbers (NBR), butyl rubber (IIR), etc., and ethylene-propylene copolymer rubbers (EPR, EPDM), and may be used singly or in arbitrary blends. Fillers to be formulated include silica, talc, clay, aluminum hydroxide, magnesium hydroxide, calcium carbonate, titanium oxide and the like.

The rubber composition making use of the compounding agent for rubber may be further formulated, aside from the afore-stated essential components, with a variety of additives ordinarily formulated in tires and other general rubber including carbon black, a vulcanizer, a crosslinking agent, a vulcanization accelerator, crosslinking promoter, various types of oils, an antiaging agent, a filler, a plasticizer and the like. The amounts of these additives may be those ordinarily used.

It will be noted that although the above-defined organosilicon compound may be used instead of other silane coupling agents in these rubber compositions, other types of silane coupling agents may be optionally added. Arbitrary silane coupling agents, which have been hitherto used in combination with a silica filler, may be added to the composition. Typical examples of such a silane coupling agent include vinyltrimethoxysilane, vinyltriethoxysilane,
γ-glycidoxypropyltrimethoxysilane,
γ-glycidoxypropyltriethoxysilane,
γ-aminopropyltriethoxysilane,
β-aminoethyl-γ-aminopropyltrimethoxysilane,
β-aminoethyl-γ-aminopropyltriethoxysilane,
γ-mercaptopropyltrimethoxysilane,
γ-mercaptopropyltriethoxysilane,
γ-methacryloxypropyltrimethoxysilane,
γ-methacryloxypropyltriethoxysilane,
γ-acryloxypropyltrimethoxysilane,
γ-acryloxypropyltriethoxysilane,
bis-triethoxysilylpropyltetrasulfide,
bis-triethoxysilylpropyldisulfide and the like.

The rubber composition formulated with the compounding agent for rubber can be formed as a composition after kneading and vulcanization with ordinary methods and can be provided for vulcanization or crosslinkage.

A tire can be formed from the above rubber composition and the rubber composition is preferably used as a tread.

The tire can be low in rolling resistance, but also significantly improved in wear resistance. It will be noted that the tire may have a conventionally known structure, which is not specifically limitative, and can be made by ordinary methods. Where the tire is provided as a pneumatic tire, such a gas to be filled in the tire includes not only ordinary air or air whose partial pressure of oxygen is controlled, but also an inert gas such as nitrogen, argon, helium or the like.

### EXAMPLES

Examples and Comparative Examples are shown to illustrate the invention in more detail and the invention should not be construed as limited to these Examples. NMR in the examples is an abbreviation for nuclear magnetic resonance spectroscopy.

### Example 1

238.4 g (1.0 mol) of γ-mercaptopropyltriethoxysilane (KBE-803, made by Shin-Etsu Chemical Co., Ltd.) and 0.069 g (7.5×10⁻⁵ mol) of RhCl(PPh₃)₃ were placed in a one-liter separable flask equipped with an agitator, a reflux condenser, a dropping funnel and a thermometer and heated on an oil bath at 80°C. Thereafter, 164.3 g (1.0 mol) of triethoxysilane (KBE-03, made by Shin-Etsu Chemical Co., Ltd.) was dropped. The mixture was heated under agitation at 90°C for five hours, followed by confirming complete disappearance of the Si-H bond of the starting material by measurement with IR, thereby completing the reaction. Subsequently, 379.7 g of the resulting reaction product, which was obtained by concentration with a rotary evaporator under reduced pressure, was transparent yellow liquid. It was confirmed according to ¹H NMR spectra that the reaction product had the structure represented by the following chemical structural formula (15). The ¹H NMR spectral data of the compound are indicated below.

¹H NMR (300 MHz, CDCl₃, δ (ppm)): 0.61 (m, 2H), 1.11 (m, 18H), 1.63 (m, 2H), 2.50 (t, 2H), 3.70 (t, 6H), 3.77 (t, 6H)

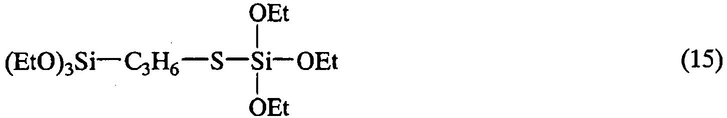

### Example 2

238.4 g (1.0 mol) of γ-mercaptopropyltriethoxysilane (KBE-803, made by Shin-Etsu Chemical Co., Ltd.) and 0.069 g (7.5×10⁻⁵ mol) of RhCl(PPh₃)₃ were placed in a one-liter separable flask equipped with an agitator, a reflux condenser, a dropping funnel and a thermometer and heated on an oil bath at 80°C. Thereafter, 188.4 g (1.0 mol) of dimethyloctoxysilane was dropped. The mixture was heated under agitation at 90°C for five hours, followed by confirming complete disappearance of the Si-H bond of the starting material by measurement with IR, thereby completing the reaction. Subsequently, 411.1 g of the resulting reaction product, which was obtained by concentration with a rotary evaporator under reduced pressure, was transparent yellow liquid. It was confirmed according to ¹H NMR spectra that the reaction product had the structure represented by the following chemical structural formula (16). The ¹H NMR spectral data of the compound are indicated below.

¹H NMR (300 MHz, CDCl₃, δ (ppm)): 0.25 (s, 6H), 0.63 (t, 2H), 0.77 (t, 3H), 1.12 (t, 9H), 1.14 to 1.29 (m, 10H), 1.44 (m, 2H), 1.61 (m, 2H), 2.47 (t, 2H), 3.57 (t, 2H), 3.70 (t, 6H)

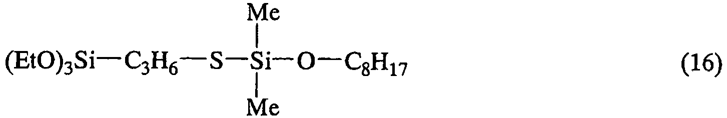

### Example 3

238.4 g (1.0 mol) of γ-mercaptopropyltriethoxysilane (KBE-803, made by Shin-Etsu Chemical Co., Ltd.) and 0.069 g (7.5×10⁻⁵ mol) of RhCl(PPh₃)₃ were placed in a one-liter separable flask equipped with an agitator, a reflux condenser, a dropping funnel and a thermometer and heated on an oil bath at 80°C. Thereafter, 244.5 g (1.0 mol) of dimethyldodecoxysilane was dropped. The mixture was heated under agitation at 90°C for five hours, followed by confirming complete disappearance of the Si-H bond of the starting material by measurement with IR, thereby completing the reaction. Subsequently, 437.4 g of the resulting reaction product, which was obtained by concentration with a rotary evaporator under reduced pressure, was transparent yellow liquid. It was confirmed according to ¹H NMR spectra that the reaction product had the structure represented by the following chemical structural formula (17). The ¹H NMR spectral data of the compound are indicated below.

¹H NMR (300 MHz, CDCl₃, δ (ppm)): 0.25 (s, 6H), 0.63 (t, 2H), 0.77 (t, 3H), 1.12 (t, 9H), 1.12 to 1.32 (m, 14H), 1.44 (m, 2H), 1.61 (m, 2H), 2.47 (t, 2H), 3.57 (t, 2H), 3.70 (t, 6H)

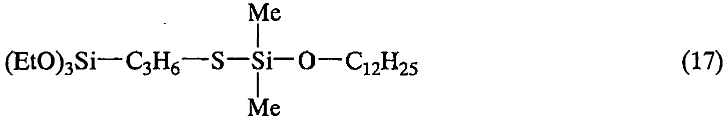

### Example 4 (Reference Example)

238.4 g (1.0 mol) of γ-mercaptopropyltriethoxysilane (KBE-803, made by Shin-Etsu Chemical Co., Ltd.) and 0.051 g (1.0×10⁻⁴ mol) of pentafluorophenyl borate were placed in a one-liter separable flask equipped with an agitator, a reflux condenser, a dropping funnel and a thermometer and heated on an oil bath at 90°C. Thereafter, 116.3 g (1.0 mol) of triethylsilane (LS-1320, made by Shin-Etsu Chemical Co., Ltd.) was dropped. The mixture was heated under agitation at 90° C for five hours, followed by confirming complete disappearance of the Si-H bond of the starting material by measurement with IR, thereby completing the reaction. Subsequently, 345.8 g of the resulting reaction product, which was obtained by concentration with a rotary evaporator under reduced pressure, was transparent yellow liquid. It was confirmed according to ¹H NMR spectra that the reaction product had the structure represented by the chemical structural formula (10) below. The ¹H NMR spectral data of the compound are indicated below.

¹H NMR (300 MHz, CDCl₃, δ (ppm)): 0.69 (m, 8H), 0.95 (t, 9H), 1.17 (t, 9H), 1.67 (m, 2H), 2.45 (t, 2H), 3.77 (t, 6H)

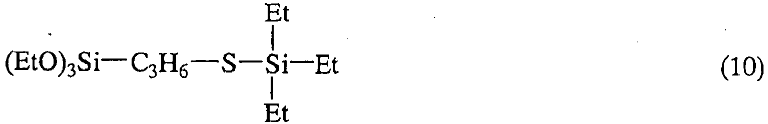

In the formula, Et is an ethyl group, and whenever it appears herein.

### Use Examples 1 to 4 and Comparative Examples 1 to 3

110 parts by weight of oil-extended emulsion polymerization SBR (#1712, made by JSR corporation), 20 parts by weight of NR (general-purpose RSS #3 grade), 20 parts by weight of carbon black (general-purpose N234 grade), 50 parts by weight of silica (Nipsil AQ, made by Nippon Silica Industrial Co. Ltd.), 6.5 parts by weight of each of the organosilicon compounds of Examples 1 to 3 or comparative compounds A to C indicated below, 1 part by weight of stearic acid, and 1 part by weight of antiaging agent 6C (Nocrac 6C, made by Ouchi Shinko Chemical Industrial Co. Ltd) were formulated to prepare a master batch. This master batch was admixed with 3.0 parts by weight of zinc oxide, 0.5 parts by weight of vulcanization accelerator DM (dibenzothiazyl disulfide), 1.0 part by weight of vulcanization accelerator NS (N-t-butyl-2-benzothiazolyl sulfeneamide) and 1.5 parts by weight of sulfur and kneaded to obtain a rubber composition.

Next, the physical properties of unvulcanized or vulcanized rubber compositions were measured according to the following methods. The results of evaluation of the examples and comparative examples are shown in Table 1.

### Physical properties of unvulcanized composition

### (1) Mooney viscosity

According to JIS K 6300, measurement was made under conditions including a residual heat over one minute, a measurement over four minutes and a temperature of 130° and the resulting measurement was indicated as an index, with Comparative Example 1 taken as 100. A smaller value of the index indicates a smaller Mooney viscosity, thus being excellent in processability.

### Physical properties of vulcanized composition

### (2) Dynamic viscoelasticity

Using a viscoelasticity measuring device (made by TA Instruments - Waters LLC), measurement was made under conditions of a tensile dynamic strain of 5%, a frequency of 15 Hz and 60°C. It will be noted that a test piece used was a sheet having a thickness of 0.2 cm and a width of 0.5 cm, a clipping distance used was set at 2 cm and an initial load was at 160 g. The value of tanδ was indicated as an index with that of Comparative Example 1 taken as 100. A smaller index value leads to a smaller hysteresis loss, thus showing low heat generating property.

### (3) Wear resistance

According to JIS K 6264-2:2005; a test was carried out using the Lambourn abrasion tester under conditions of room temperature and a slip ratio of 25%, and the results are indicated as an index relative to the reciprocal of a wear volume in Comparative Example 1 taken as 100. A larger index value leads to a smaller wear volume, showing an excellent wear resistance.

### Comparative compound A

(EtO)₃Si-C₃H₆-S₄-C₃H₆-Si(OEt)₃

### Comparative compound B

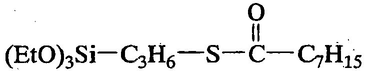

### Comparative compound C

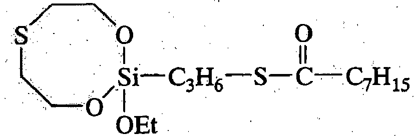

| Table 1 | | Example | | | | Comparative Example | | |
|---|---|---|---|---|---|---|---|---|
| Formulation (parts by weight) | | 1 | 2 | 3 | 4 | 1 | 2 | 3 |
| | SBR | 110 | 110 | 110 | 110 | 110 | 110 | 110 |
| | NR | 20 | 20 | 20 | 20 | 20 | 20 | 20 |
| | Carbon black | 20 | 20 | 20 | 20 | 20 | 20 | 20 |
| | Silica | 50 | 50 | 50 | 50 | 50 | 50 | 50 |
| | Stearic acid | 1 | 1 | 1 | 1 | 1 | 1 | 1 |
| | 6C | 1 | 1 | 1 | 1 | 1 | 1 | 1 |
| | Zinc oxide | 3 | 3 | 3 | 3 | 3 | 3 | 3 |
| | DM | 0.5 | 0.5 | 0.5 | 0.5 | 0.5 | 0.5 | 0.5 |
| | NS | 1 | 1 | 1 | 1 | 1 | 1 | 1 |
| | Sulfur | 1.5 | 1.5 | 1.5 | 1.5 | 1.5 | 1.5 | 1.5 |
| | Compound (10) | - | - | - | 6.5 | - | - | - |
| | Compound (15) | 6.5 | - | - | - | - | - | - |
| | Compound (16) | - | 6.5 | - | - | - | - | - |
| | Compound (17) | - | - | 6.5 | - | - | - | - |
| | Comp. Compound A | - | - | - | - | 6.5 | - | - |
| | Comp. Compound B | | - | - | - | - | 6.5 | - |
| | Comp. Compound C | - | - | - | - | - | | 6.5 |
| Physical property of unvulcanized composition | Mooney viscosity | 97 | 97 | 97 | 98 | 100 | 98 | 97 |
| Physical properties: vulcanized composition | Dynamic viscoelasticity tanδ (60°) | 95 | 95 | 95 | 98 | 100 | 99 | 98 |
| | Wear resistance | 106 | 104 | 105 | 102 | 100 | 101 | 101 |

### Notes

In respect of numerical ranges disclosed in the present description it will of course be understood that in the normal way the technical criterion for the upper limit is different from the technical criterion for the lower limit, i.e. the upper and lower limits are intrinsically distinct proposals.

For the avoidance of doubt it is confirmed that in the general description above, in the usual way the proposal of general preferences and options in respect of different features of the organosilicon compound, methods, compounding agents, rubber compositions and tires constitutes the proposal of general combinations of those general preferences and options for the different features, insofar as they are combinable and compatible and are put forward in the same context.

## Claims

1. A method for preparing an organosilicon compound of the following general formula (3): 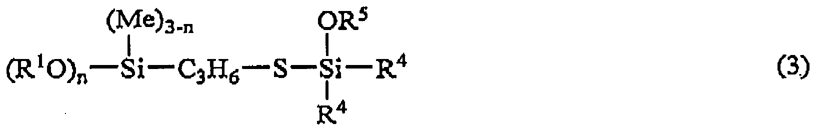 wherein
R¹ is an unsubstituted or substituted alkyl group having 1 to 10 carbon atoms or an unsubstituted or substituted aryl group having 6 to 10 carbon atoms,
R⁴ is independently an unsubstituted or substituted alkyl group having 1 to 20 carbon atoms, an unsubstituted or substituted aryl group having 6 to 10 carbon atoms, an unsubstituted or substituted aralkyl group having 7 to 10 carbon atoms, an unsubstituted or substituted alkenyl group having 2 to 10 carbon atoms or an unsubstituted or substituted organoxy group having 1 to 20 carbon atoms,
R⁵ is an unsubstituted or substituted alkyl group having 1 to 20 carbon atoms, an unsubstituted or substituted aryl group having 6 to 10 carbon atoms, an unsubstituted or substituted aralkyl group having 7 to 10 carbon atoms or an unsubstituted or substituted alkenyl group having 2 to 10 carbon atoms,
Me is a methyl group, and n is an integer of 1 to 3, the method comprising
reacting, in the presence of transition metal catalyst RhCl(PPh₃)₃ or Lewis acid catalyst (pentafluorophenyl)boric acid/borate, an organosilicon compound of the following general formula (i') having a mercapto group with an organosilicon compound of the following general formula (ii') having an Si-H bond to form a sulfur-silicon bond: 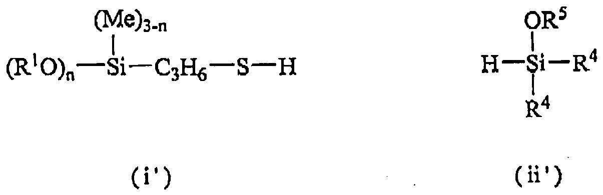 wherein R¹, R⁴, R⁵, Me and n have the same meanings as defined above.

2. A method of claim 1 wherein the organosilicon compound of formula (3) is represented by any of the following general formulae (7) to (9): 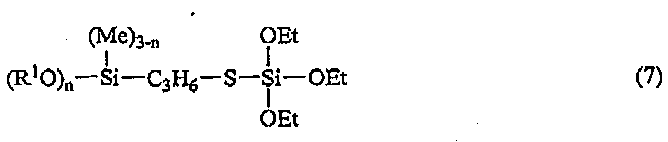 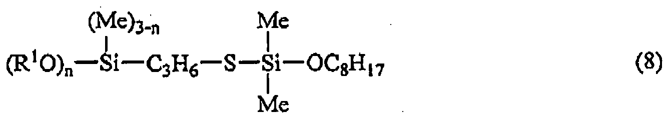 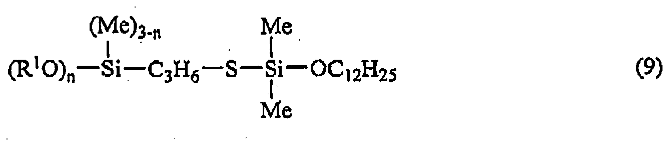 wherein R¹ and n have the same meanings as defined above, Me is a methyl group, and Et is an ethyl group.

3. A method of claim 1 or 2 wherein in the reacting step a ratio of the organosilicon compound having a mercapto group to the organosilicon compound having a Si-H bond is within a range of 0.5 to 1.5 mol of the Si-H bond per mole of the mercapto group.

4. A method of any one of claims 1 to 3 wherein in the reacting step a ratio of the organosilicon compound having a mercapto group to the catalyst present in the reacting step is within a range of 0.000001 to 0.1 mol of the catalyst per mole of the mercapto group.

5. A method of any one of the preceding claims wherein R¹ is CH₃CH₂-.

6. A method of any one of the preceding claims wherein R⁴ is selected from C₁₋₆ alkyl, phenyl and C₁₋₁₀ alkoxy.

## Patentansprüche

1. Verfahren zur Herstellung einer Organosiliciumverbindung der folgenden allgemeinen Formel (3): 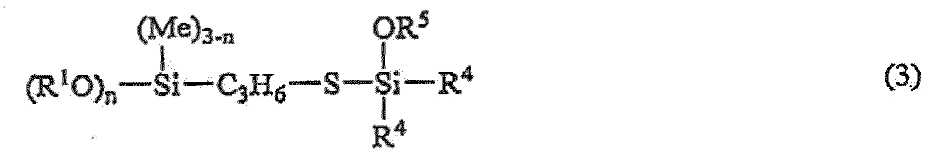 worin
R¹ eine unsubstituierte oder substituierte Alkylgruppe mit 1 bis 10 Kohlenstoffatomen oder eine unsubstituierte oder substituierte Arylgruppe mit 6 bis 10 Kohlenstoffatomen ist,
R⁴ unabhängig eine unsubstituierte oder substituierte Alkylgruppe mit 1 bis 20 Kohlenstoffatomen, eine unsubstituierte oder substituierte Arylgruppe mit 6 bis 10 Kohlenstoffatomen, eine unsubstituierte oder substituierte Aralkylgruppe mit 7 bis 10 Kohlenstoffatomen, eine unsubstituierte oder substituierte Alkenylgruppe mit 2 bis 10 Kohlenstoffatomen oder eine unsubstituierte oder substituierte Organoxygruppe mit 1 bis 20 Kohlenstoffatomen ist,
R⁵ eine unsubstituierte oder substituierte Alkylgruppe mit 1 bis 20 Kohlenstoffatomen, eine unsubstituierte oder substituierte Arylgruppe mit 6 bis 10 Kohlenstoffatomen, eine unsubstituierte oder substituierte Aralkylgruppe mit 7 bis 10 Kohlenstoffatomen oder eine unsubstituierte oder substituierte Alkenylgruppe mit 2 bis 10 Kohlenstoffatomen ist,
Me eine Methylgruppe ist und n eine ganze Zahl von 1 bis 3 ist,
wobei das Verfahren Folgendes umfasst:
das Umsetzen einer Organosiliciumverbindung der folgenden allgemeinen Formel (i'), die eine Mercapto-Gruppe aufweist, mit einer Organosiliciumverbindung der folgenden allgemeinen Formel (ii'), die eine Si-H-Bindung aufweist, in Gegenwart eines Übergangsmetallkatalysators RhCl (PPh₃)₃ oder Lewis-Säure-Katalysators (Pentafluorphenyl)borsäure/borat, um eine Schwefel-Silicium-Bindung zu bilden: 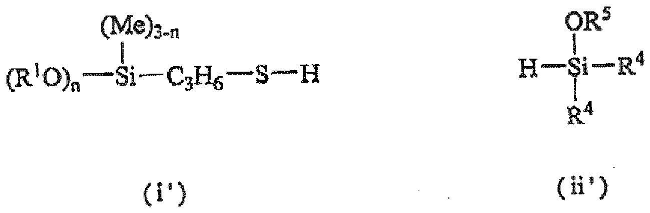
worin R¹, R⁴, R⁵, Me und n dieselben Bedeutungen haben wie oben definiert.

2. Verfahren nach Anspruch 1, worin die Organosiliciumverbindung der Formel (3) durch eine der folgenden allgemeinen Formeln (7) bis (9) dargestellt ist: 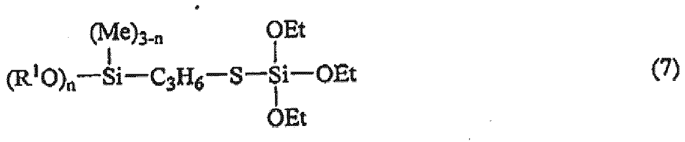 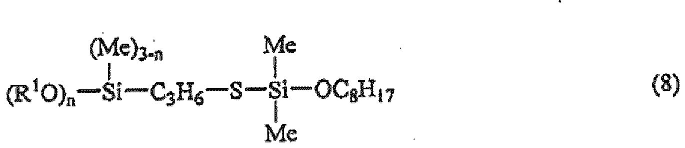 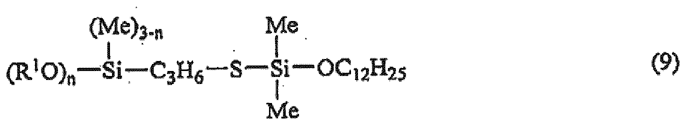 worin R¹ und n dieselben Bedeutungen haben wie oben definiert, Me eine Methylgruppe ist und Et eine Ethylgruppe ist.

3. Verfahren nach Anspruch 1 oder 2, worin in dem Umsetzungsschritt das Verhältnis der Organosiliciumverbindung mit einer Mercapto-Gruppe zu der Organosiliciumverbindung mit einer Si-H-Bindung im Bereich von 0,5 bis 1,5 Mol der Si-H-Bindungen pro Mol der Mercapto-Gruppen liegt.

4. Verfahren nach einem der Ansprüche 1 bis 3, worin in dem Umsetzungsschritt das Verhältnis der Organosiliciumverbindung mit einer Mercaptogruppe zu dem Katalysator, der in dem Umsetzungsschritt vorhanden ist, im Bereich von 0,000001 bis 0,1 Mol des Katalysators pro Mol der Mercapto-Gruppen liegt.

5. Verfahren nach einem der vorangegangenen Ansprüche, worin R¹ CH₃CH₂- ist.

6. Verfahren nach einem der vorangegangenen Ansprüche, worin R⁴ aus C₁₋₆-Alkyl, Phenyl und C₁₋₁₀-Alkoxy ausgewählt ist.

## Revendications

1. Procédé pour préparer un composé organique du silicium de formule générale (3) suivante : 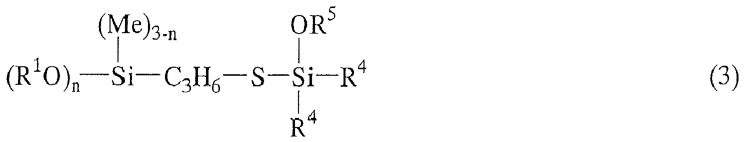 dans laquelle
R¹ est un groupe alkyle substitué ou non substitué ayant 1 à 10 atomes de carbone ou un groupe aryle substitué ou non substitué ayant 6 à 10 atomes de carbone,
R⁴ est indépendamment un groupe alkyle substitué ou non substitué ayant 1 à 20 atomes de carbone, un groupe aryle substitué ou non substitué ayant 6 à 10 atomes de carbone, un groupe aralkyle substitué ou non substitué ayant 7 à 10 atomes de carbone, un groupe alcényle substitué ou non substitué ayant 2 à 10 atomes de carbone, ou un groupe organoxy substitué ou non substitué ayant 1 à 20 atomes de carbone,
R⁵ est un groupe alkyle substitué ou non substitué ayant 1 à 20 atomes de carbone, un groupe aryle substitué ou non substitué ayant 6 à 10 atomes de carbone, un groupe aralkyle substitué ou non substitué ayant 7 à 10 atomes de carbone, ou un groupe alcényle substitué ou non substitué ayant 2 à 10 atomes de carbone,
Me est un groupe méthyle, et n est un entier de 1 à 3, le procédé comprenant
la réaction, en présence d'un catalyseur de métal de transition RhCl(PPh₃)₃ ou d'un catalyseur acide de Lewis acide (pentafluorophényl)borique/borate, d'un composé organique du silicium de formule générale (i') suivante ayant un groupe mercapto avec un composé organique du silicium de formule générale (ii') suivante ayant une liaison Si-H, pour former une liaison soufre-silicium : 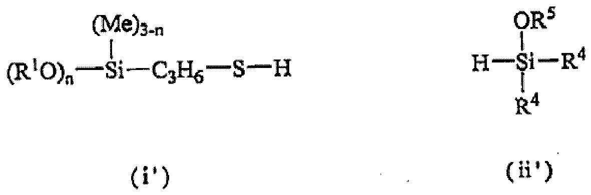 où R¹, R⁴, R⁵, Me et n ont les mêmes significations que celles définies ci-dessus.

2. Procédé selon la revendication 1, dans lequel le composé organique du silicium de formule (3) est représenté par l'une quelconque des formules générales (7) à (9) suivantes : 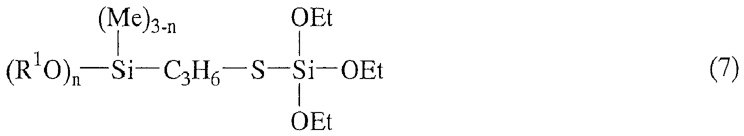 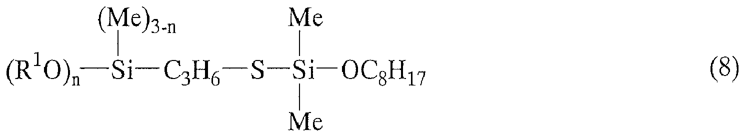 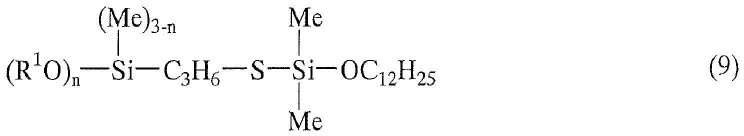 dans lesquelles R¹ et n ont les mêmes significations que celles définies ci-dessus, Me est un groupe méthyle, et Et est un groupe éthyle.

3. Procédé selon la revendication 1 ou 2, dans lequel, dans l'étape de réaction, le rapport du composé organique du silicium ayant un groupe mercapto au composé organique du silicium ayant une liaison Si-H est situé dans la plage allant de 0,5 à 1,5 moles de la liaison Si-H par mole du groupe mercapto.

4. Procédé selon l'une quelconque des revendications 1 à 3, dans lequel, dans l'étape de réaction, le rapport du composé organique du silicium ayant un groupe mercapto au catalyseur présent dans l'étape de réaction est situé dans la plage allant de 0,000001 à 0,1 mole du catalyseur par mole du groupe mercapto.

5. Procédé selon l'une quelconque des revendications précédentes, dans lequel R¹ est CH₃CH₂-.

6. Procédé selon l'une quelconque des revendications précédentes, dans lequel R⁴ est choisi parmi les radicaux alkyle en C₁ à C₆, phényle, et alcoxy en C₁ à C₁₀.
